# EUROPÄISCHE PATENTSCHRIFT

(11) **EP 0 646 629 B1**
(45) Veröffentlichungstag und Bekanntmachung des Hinweises auf die Patenterteilung: **18.06.1997**
(21) Anmeldenummer: 94114860.3
(22) Anmeldetag: 21.09.1994
(51) Int. Cl.: C09B 62/51, C09B 62/085, D06P 3/66, C09B 67/22

(54) **Polyfunktionelle Azoreaktivfarbstoffe**
Polyfunctional azo reactive dyes
Colorants azoiques réactifs polyfonctionnels

(30) Priorität: 04.10.1993 DE 4333777
(43) Veröffentlichungstag der Anmeldung: 05.04.1995
(73) Patentinhaber: BAYER AG, 51368 Leverkusen (DE)
(72) Erfinder: Kunde, Klaus, Dr., D-53819 Neunkirchen (DE)

(56) Entgegenhaltungen:
- EP-A- 0 299 315
- EP-A- 0 552 634
- GB-A- 2 026 527

## Beschreibung

Die Erfindung betrifft neue trifunktionelle Reaktivfarbstoffe, ein Verfahren zu ihrer Herstellung und ihre Verwendung.

Aus EP-A-552 634 sind bereits polyfunktionelle Reaktivfarbstoffe bekannt, die einen Vinylsulfonyl-reaktiven Benzoylrest tragen.

Der vorliegenden Erfindung liegt die Aufgabe zugrunde, Reaktivfarbstoffe mit verbesserten Echtheiten zur Verfügung zu stellen.

Die Erfindung betrifft Reaktivfarbstoffe der allgemeinen Formel (I) 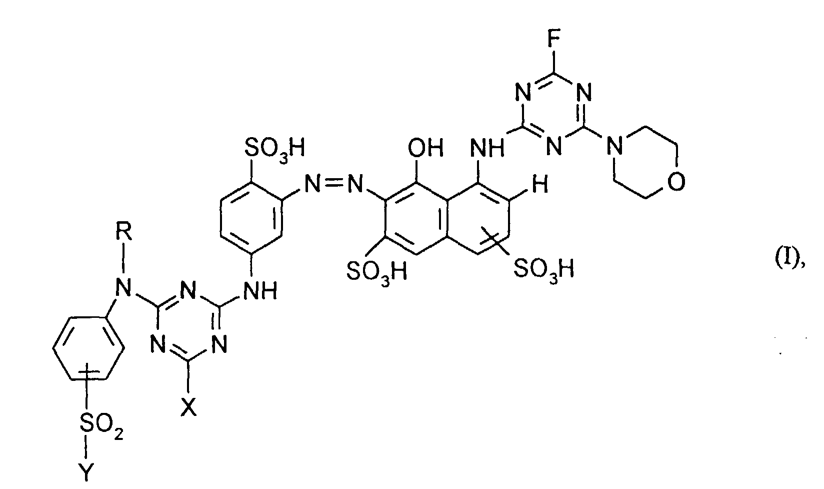 worin
- X: für F, Cl oder OCH₃ steht und
- Y: für CH₂CH₂OSO₃H, CH₂CH₂Cl, CH₂CH₂OH oder CH=CH₂ steht und
- R: Wasserstoff oder C₁-C₄-Alkyl bedeutet.

Bevorzugt sind Farbstoffe der Formel (II) 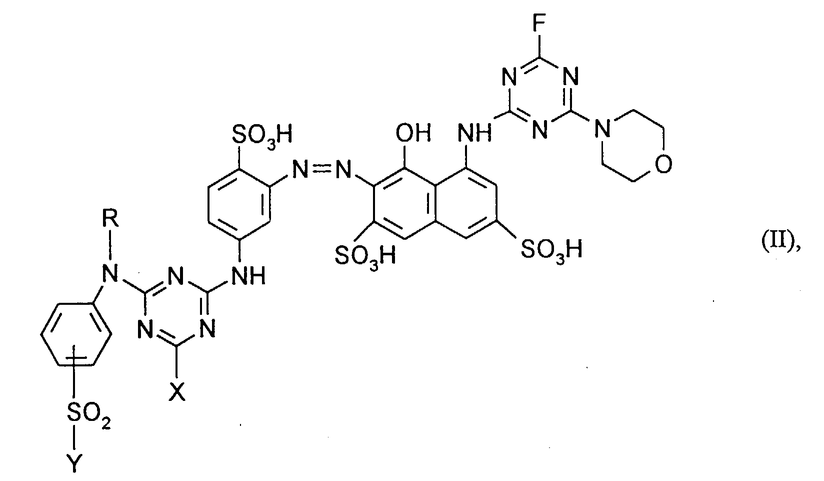 worin
X und R die obigen Bedeutungen besitzen.

Als eine besonders bevorzugte Ausführungsform sind Farbstoffe der Formel (II) zu nennen, worin X für Chlor steht und Y für CH₂CH₂OSO₃H oder CH=CH₂.

Weiterhin besonders bevorzugt sind Farbstoffe der Formel (I), worin R für Wasserstoff oder Methyl steht und X die oben genannte Bedeutung besitzt.

Als ebenfalls besonders bevorzugt sind Farbstoffe der Formel (III) zu nennen, 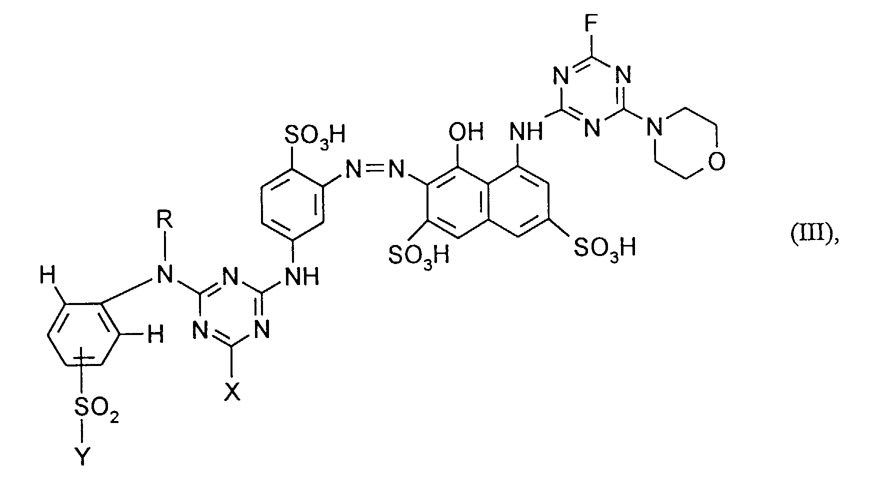 worin
Y = CH₂CH₂OSO₃H oder CH = CH₂ und
R und X die obigen Bedeutungen haben.

Ganz besonders bevorzugt sind die beiden Farbstoffe der Formel (IV) bzw. Mischungen der beiden 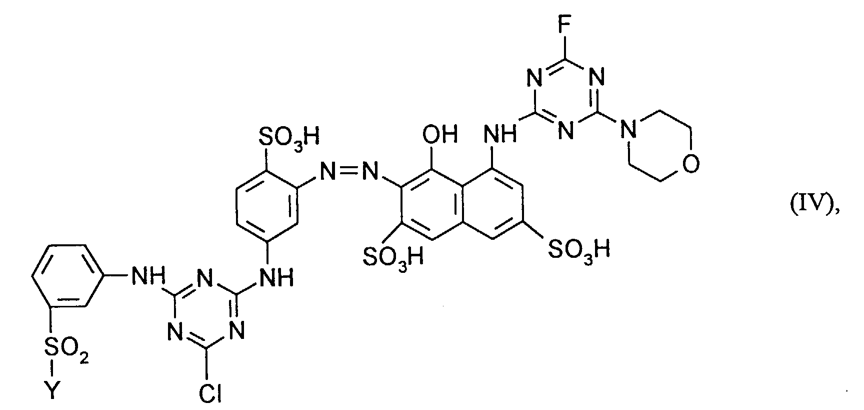 worin
Y = CH₂CH₂OSO₃H oder CH=CH₂.

Die Erfindung betrifft weiterhin ein Verfahren zur Herstellung der erfindungsgemäßen Farbstoffe der Formel (I), das dadurch gekennzeichnet ist, daß man die Aminoverbindung der allgemeinen Formel (V) 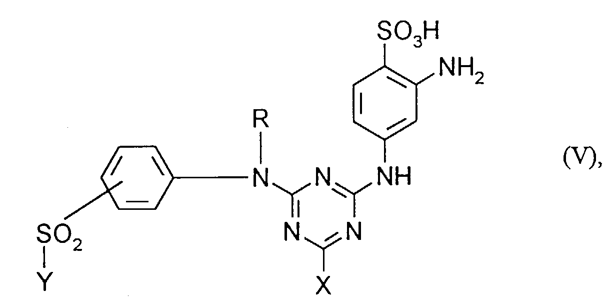 worin
Y, R und X die oben angegebenen Bedeutungen haben, diazotiert und die dabei erhaltenen Diazoniumverbindungen mit der Kupplungskomponente der allgemeinen Formel (VI) 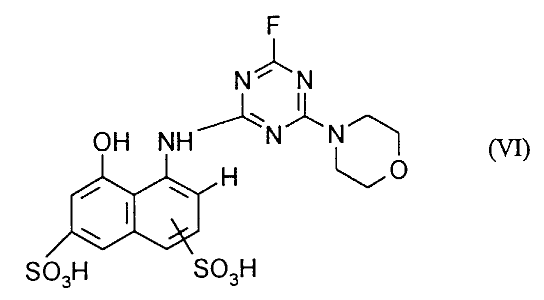 umsetzt. Die Herstellung der Aminoverbindung (V) ist beispielsweise in GB-A-20 26 527, EP-A-87 113 oder in JP-A-75 31 566 beschrieben. Die Herstellung der Kupplungskomponente der Formel (VI) ist aus US-A-4 988 803 bekannt.

Bevorzugt kommen bei dem Verfahren zur Herstellung der erfindungsgemäßen Farbstoffe der Formel (I) Aminoverbindungen der Formel (V) zum Einsatz, worin X für Cl steht, Y für CH₂CH₂OSO₃H oder CH=CH₂ steht und R die oben genannte Bedeutung besitzt. Ebenfalls bevorzugt sind Aminoverbindungen der Formel (V), worin R für Wasserstoff oder Methyl steht und X für F, Cl oder OCH₃ und Y für CH₂CH₂OSO₃H oder CH=CH₂ steht sowie Aminoverbindungen der Formel (Va) 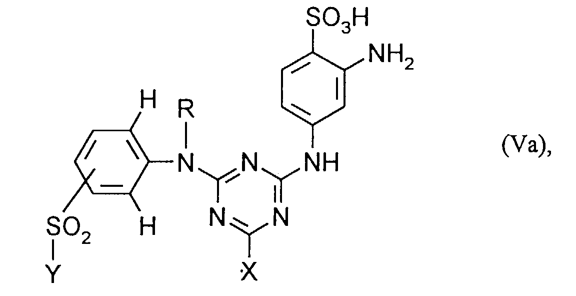 worin
X, Y und R die obige Bedeutung besitzen, insbesondere Aminoverbindungen der Formel (Vb)

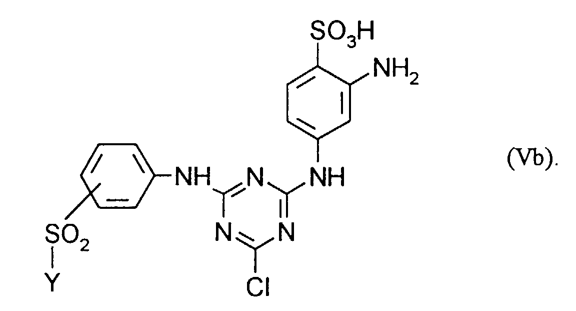

Die bei dem Verfahren bevorzugt zum Einsatz kommende Kupplungskomponente entspricht der Formel (VIa)

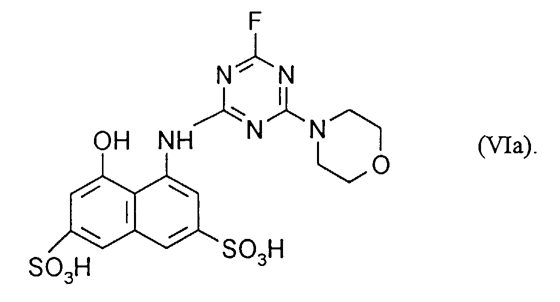

Die Reaktivfarbstoffe der Formel (I) eignen sich zum Färben und Bedrucken von natürlichen oder synthetischen Hydroxy- oder Amidgruppen-haltigen Materialien wie Seide, Wolle, synthetischen Polyamidfasern, Zellulose-haltigen Materialien oder Leder, insbesondere aber Zellulose-haltiger Materialien faseriger Struktur wie Leinen, Zellstoff, regenerierte Zellulose und vor allem Baumwolle, in roten Farbtönen mit verbesserten Echtheiten. Sie eignen sich sowohl für das Ausziehverfahren als auch zum Färben nach den üblichen Foulard-Färbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung, fixiert werden.

Die Reaktivfarbstoffe der Formel (I) zeichnen sich durch hohe Reaktivität und ausgezeichnetes Fixiervermögen aus. Aufgrund ihrer Polyfunktionalität ergeben sich auch aus langer Flotte hohe Fixierausbeuten. Sie sind charakterisiert durch relative Unabhängigkeit der Ergiebigkeit von der Färbetemperatur und können daher nach dem Ausziehverfahren bei niedrigen bis mittleren Färbetemperaturen eingesetzt werden. Beim Klotz-Dämpf-Verfahren erfordern sie nur kurze Dämpfzeiten. Sie ergeben Färbungen hoher Farbstärke mit guten Licht- und Naßechtheiten.

### Beispiel

58 g des Kondensationsproduktes aus 2,4,6-Trichlor-s-triazin, 3-(β-Sulfatoethylsulfonyl)anilin und 2,4-Diaminobenzolsulfonsäure der Formel 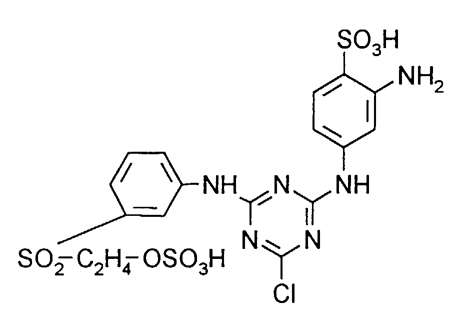 werden in 250 ml Wasser gelöst, mit 30 ml konzentrierter Salzsäure versetzt und durch Zugabe von 6,9 g Natriumnitrit, gelöst in 25 ml Wasser, bei 0 bis 5°C diazotiert. Die dabei erhaltene Diazoniumverbindung wird bei pH 7 und 0 bis 5°C mit 50,1 g des Kondensationsproduktes aus 2,4,6-Trifluor-s-triazin, 4-Amino-5-hydroxy-2,7-naphthalindisulfonsäure und Morpholin der Formel 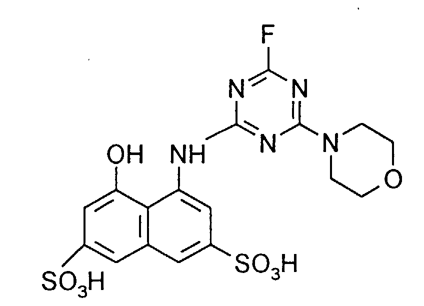 zum Farbstoff der Formel 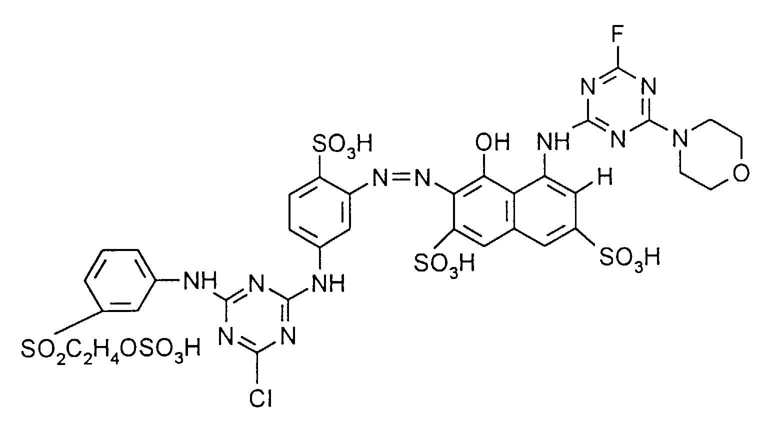 gekuppelt. Er wird durch Aussalzen isoliert und anschließend getrocknet. Er färbt Baumwolle und regenerierte Zellulose in roten Tönen.
λₘₐₓ (Wasser): 513 nm, 533 nm

Verwendet man zur Herstellung der Diazokomponente statt 2,4,6-Dichlor-s-triazin eine äquimolare Menge 2-Methoxy-4,6-dichlor-s-triazin, so erhält man ebenfalls einen wertvollen Farbstoff, der Baumwolle und regenerierte Zellulose in roten Tönen färbt.
λₘₐₓ (Wasser): 520 nm, 533 nm

Verwendet man zur Herstellung der Diazokomponente statt 3-(β-Sulfatoethylsulfonyl)anilin eine äquimolare Menge 3-(Vinylsulfonyl)anilin, so erhält man ebenfalls einen wertvollen Farbstoff, der Baumwolle und regenerierte Zellulose in roten Tönen färbt.
λₘₐₓ (Wasser): 520 nm, 533 nm

## Patentansprüche

1. Reaktivfarbstoffe der Formel (I) 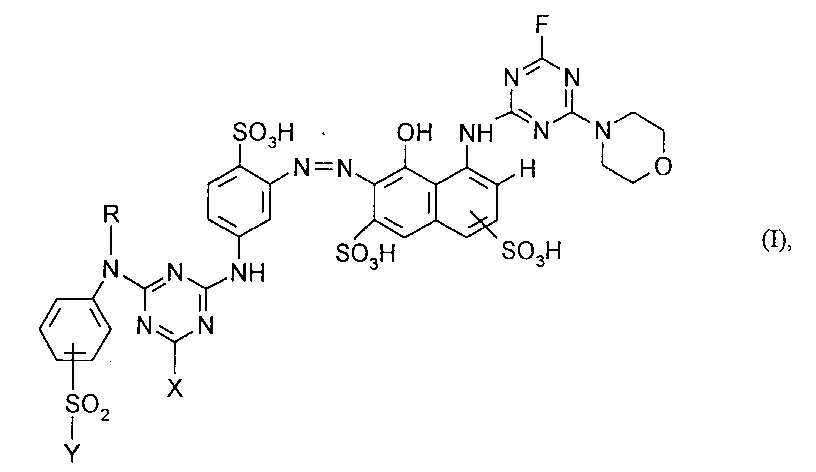 worin
X für F, Cl oder OCH₃ steht,
Y für CH₂CH₂OSO₃H, CH₂CH₂Cl, CH₂CH₂OH oder CH = CH₂ steht und
R Wasserstoff oder C₁-C₄-Alkyl bedeutet.

2. Reaktivfarbstoffe gemäß Anspruch 1 der Formel (II) 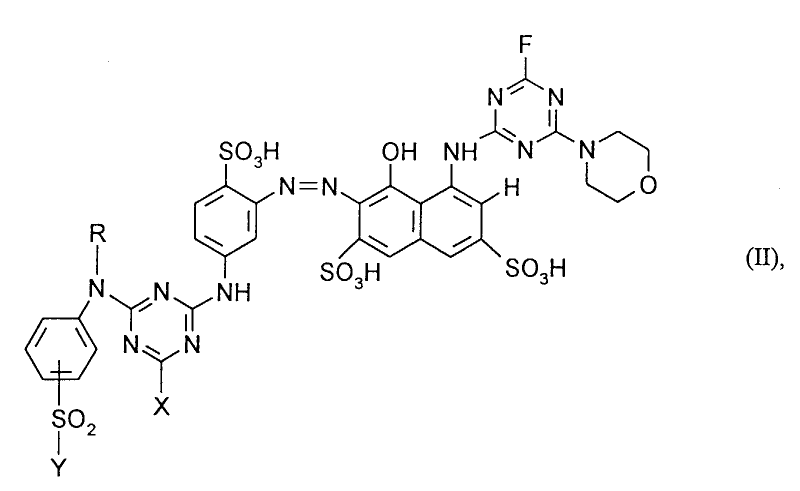 worin
X, Y und R die in Anspruch 1 genannten Bedeutungen besitzen.

3. Reaktivfarbstoffe gemäß Anspruch 2, worin X für Chlor und Y für CH₂CH₂OSO₃H oder CH = CH₂ steht.

4. Reaktivfarbstoffe gemäß Anspruch 1, dadurch gekennzeichnet, daß R für Wasserstoff oder Methyl steht.

5. Reaktivfarbstoffe gemäß Anspruch 1, die der Formel (III) entsprechen 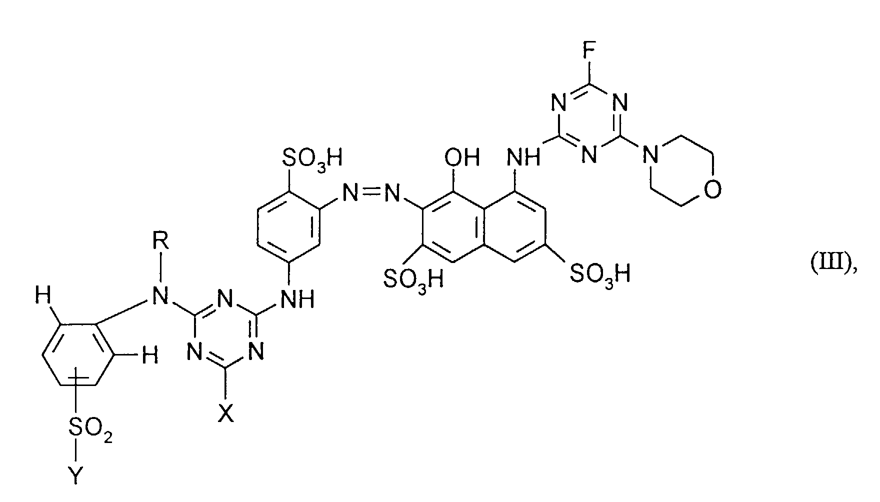 worin
Y = CH₂CH₂OSO₃H oder CH = CH₂ und
R und X die in Anspruch 1 genannten Bedeutungen haben.

6. Reaktivfarbstoffe gemäß Anspruch 1 der Formel (IV) 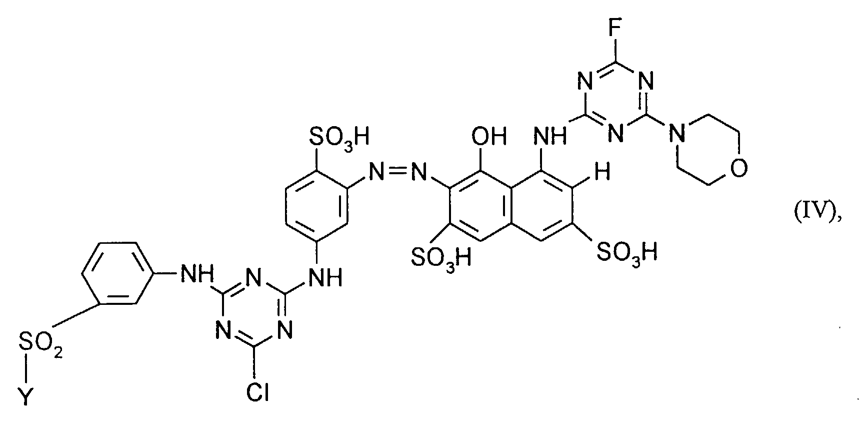 worin
Y für CH₂CH₂OSO₃H oder CH = CH₂ steht.

7. Verfahren zur Herstellung von Reaktivfarbstoffen der Formel (I) gemäß Anspruch 1, dadurch gekennzeichnet, daß man Aminoverbindungen der Formel (V) 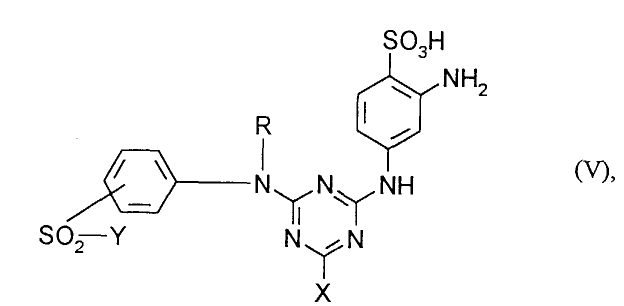 worin
Y, R und X die in Anspruch 1 genannten Bedeutungen haben, diazotiert und die dabei erhaltene Diazoniumverbindung mit einer Kupplungskomponente der allgemeinen Formel (VI) 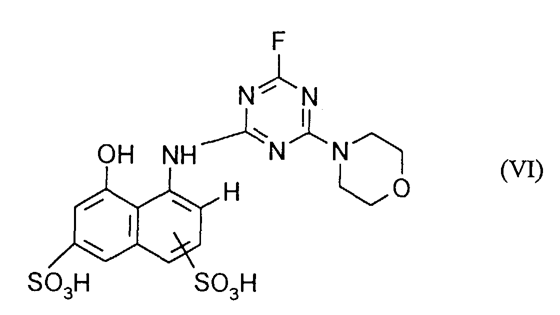 umsetzt.

8. Verwendung der Reaktivfarbstoffe gemäß Anspruch 1 zum Färben und Bedrucken von natürlichen oder synthetischen Hydroxy- oder Amidgruppenhaltigen Materialien.

9. Textilprodukte, die mit Farbstoffen der Formel (I) gemäß Anspruch 1 gefärbt oder bedruckt sind.

## Claims

1. Reactive dyestuffs of the formula (I) 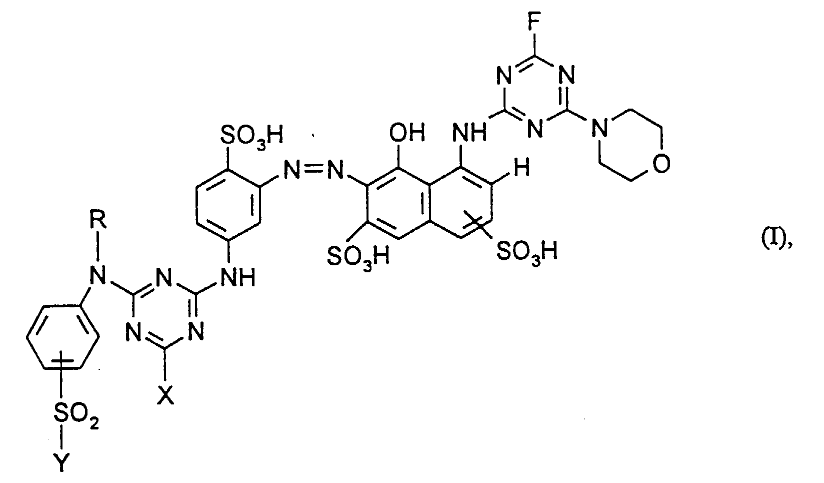 wherein
X represents F, Cl or OCH₃,
Y represents CH₂CH₂OSO₃H, CH₂CH₂Cl, CH₂CH₂OH or CH = CH₂, and
R denotes hydrogen or C₁-C₄-alkyl.

2. Reactive dyestuffs according to Claim 1, of the formula (II) 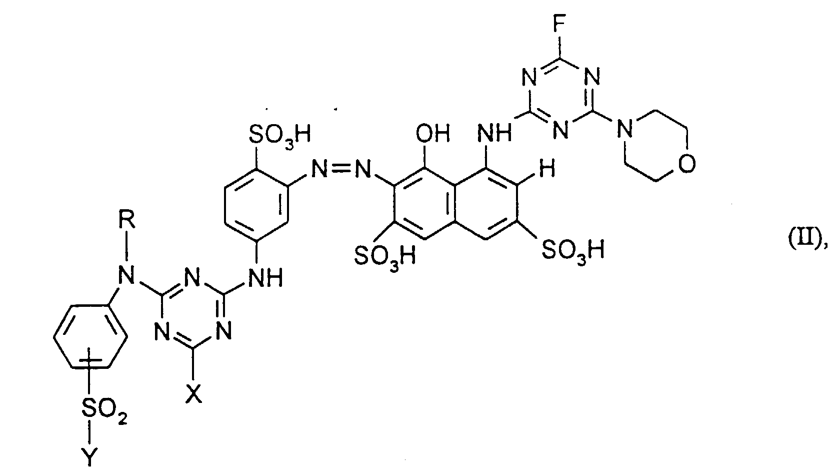 wherein
X, Y and R have the meanings given in Claim 1.

3. Reactive dyestuffs according to Claim 2, wherein X represents chlorine and Y represents CH₂CH₂OSO₃H or CH = CH₂.

4. Reactive dyestuffs according to Claim 1, characterized in that R represents hydrogen or methyl.

5. Reactive dyestuffs according to Claim 1, conforming to the formula (III) 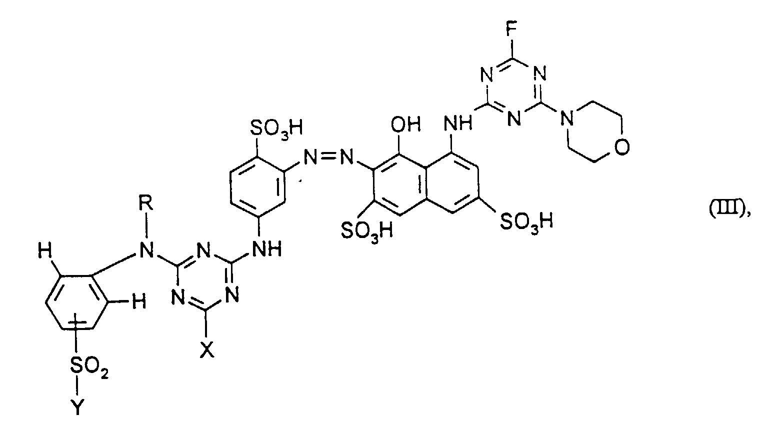 wherein
Y is CH₂CH₂OSO₃H or CH = CH₂, and
R and X have the meanings given in Claim 1.

6. Reactive dyestuffs according to Claim 1, conforming to the formula (IV) 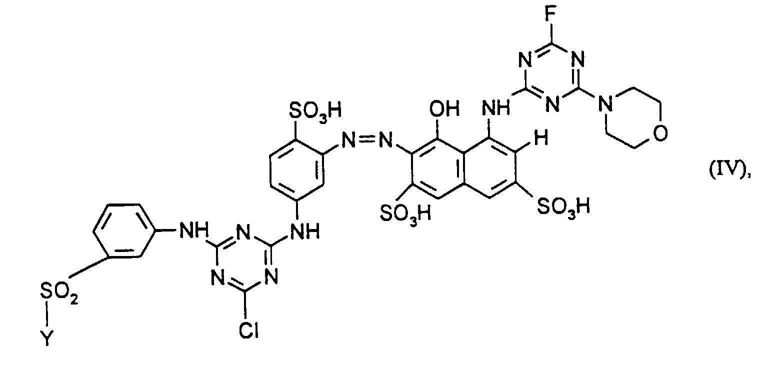 wherein
Y represents CH₂CH₂OSO₃H or CH = CH₂.

7. Process for preparing reactive dyestuffs of the formula (I) according to Claim 1, characterized in that amino compounds of the formula (V) 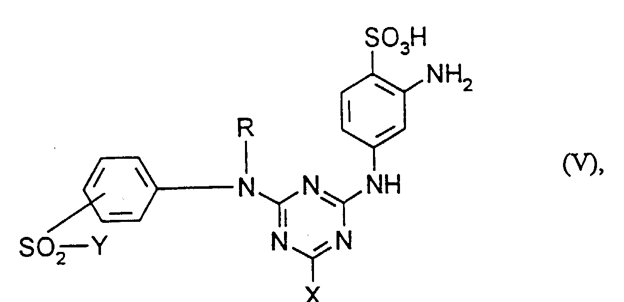 wherein
Y, R and X have the meanings given in Claim 1, are diazotized, and the resulting diazonium compound is reacted with a coupling component of the general formula (VI)

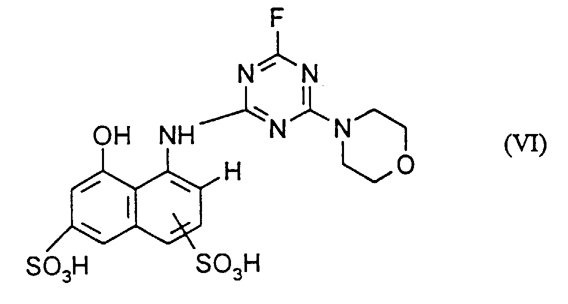

8. Use of the reactive dyestuffs according to Claim 1 for dyeing and printing natural or synthetic hydroxyl- or amido-containing materials.

9. Textile products dyed or printed with dyestuffs of the formula (I) according to Claim 1.

## Revendications

1. Colorants réactifs de formule I : 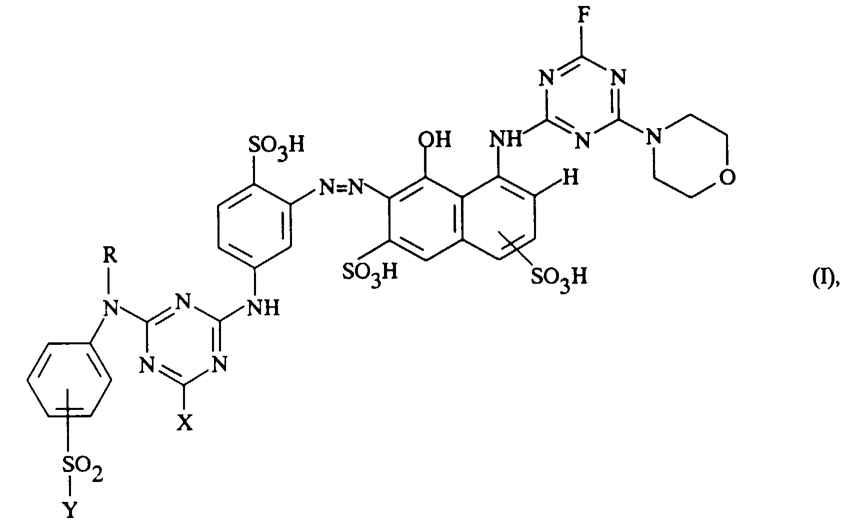 dans laquelle
X représente F, Cl ou OCH₃,
Y représente CH₂CH₂OSO₃H, CH₂CH₂Cl, CH₂CH₂OH ou CH=CH₂ et
R représente l'hydrogène ou un groupe alkyle en C₁-C₄.

2. Colorants réactifs selon la revendication 1, de formule II 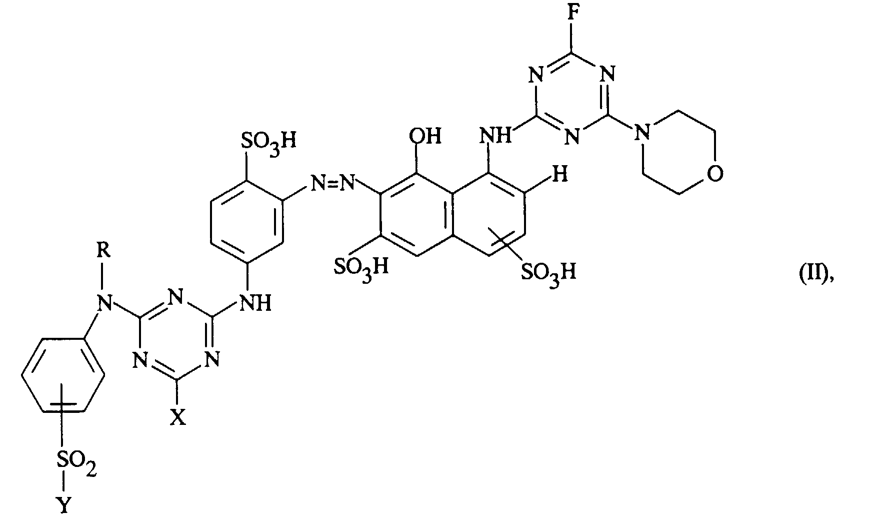 dans laquelle
X, Y et R ont les significations indiquées dans la revendication 1.

3. Colorants réactifs selon la revendication 2, pour lesquels X représente le chlore et Y représente CH₂CH₂OSO₃H ou CH=CH₂.

4. Colorants réactifs selon la revendication 1, caractérisés en ce que R représente l'hydrogène ou un groupe méthyle.

5. Colorants réactifs selon la revendication 1, répondant à la formule III: 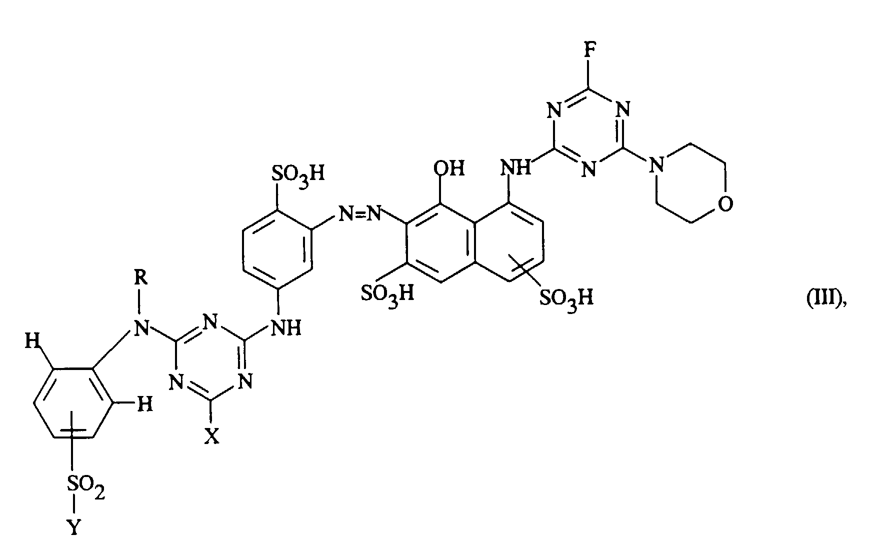 dans laquelle
Y = CH₂CH₂OSO₃H ou CH=CH₂ et
R et X ont les significations indiquées dans la revendication 1.

6. Colorants réactifs selon la revendication 1, répondant à la formule IV: 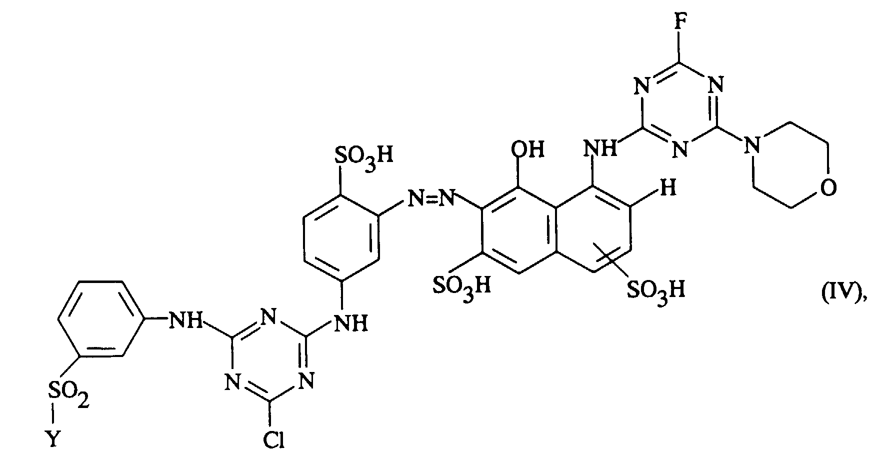 dans laquelle
Y représente CH₂CH₂OSO₃H ou CH=CH₂.

7. Procédé de préparation des colorants réactifs de formule I selon la revendication 1, caractérisé en ce que l'on diazote des dérivés aminés de formule V : 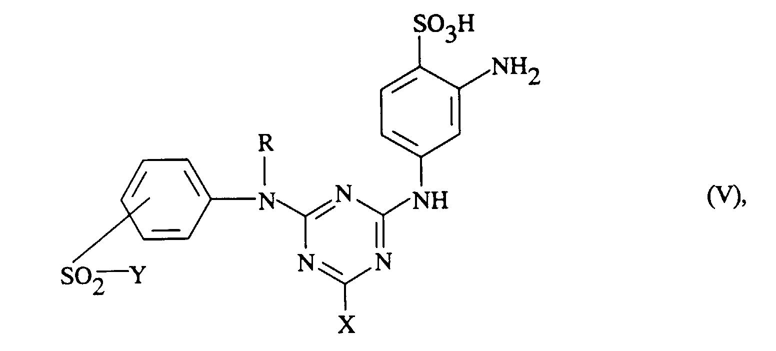 dans laquelle
Y, R et X ont les significations indiquées dans la revendication 1, puis on fait réagir le dérivé de diazonium ainsi obtenu avec un copulant de formule générale VI :

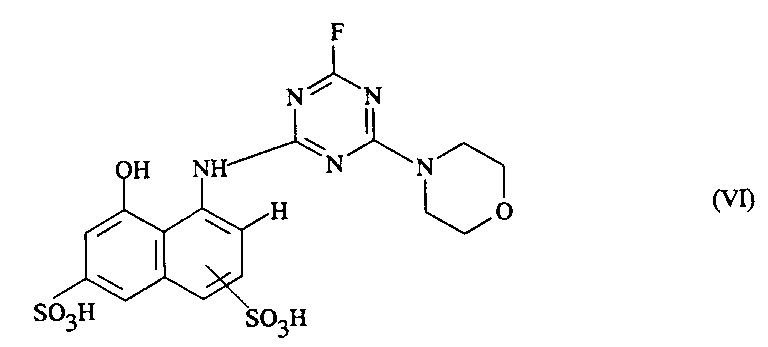

8. Utilisation des colorants réactifs selon la revendication 1 pour la teinture et l'impression de matières naturelles ou synthétiques contenant des groupes hydroxy ou amide.

9. Produits textiles teints ou imprimés par des colorants de formule I selon la revendication 1.
